# EUROPEAN PATENT APPLICATION

(11) **EP 4 545 349 A1**
(43) Date of publication of application: **30.04.2025**
(21) Application number: 23827574.7
(22) Date of filing: 26.06.2023
(51) Int. Cl.: B60L 53/24, B60L 53/22, H02M 1/00, H02M 3/335, H02M 7/23, B60L 53/10

(54) **POWER CONVERSION DEVICE**

(30) Priority: 24.06.2022 KR 20220077794; 30.03.2023 KR 20230042341
(71) Applicant: LG INNOTEK CO. LTD, Gangseo-gu Seoul 07796 (KR)
(72) Inventor: LEE, Jae Sam, Seoul 07796 (KR); LEE, Ju Sung, Seoul 07796 (KR); HONG, Eun Hyuk, Seoul 07796 (KR)
(74) Representative: M. Zardi & Co S.A.
(86) International application number: PCT/KR2023/008801
(87) International publication number: WO 2023/249466

(57) **Abstract**

A power conversion device according to one embodiment of the present invention comprises: a power conversion unit which converts an alternating current to a direct current when connected to an alternating current power source to charge a battery; and an initial charging unit which is connected to a secondary output side of the power conversion unit and initially charges a load side capacitor, wherein an output terminal of the power conversion unit is connected to the battery and the load side capacitor.

## Description

### [TECHNICAL FIELD]

The present invention relates to a power conversion device, and more particularly to a power conversion device capable of initial charging and an automotive battery system comprising the same.

### [BACKGROUND ART]

In order to convert a battery power to a power suitable for internal loads of a vehicle, a voltage conversion is required. A battery voltage may be in a range of 400 V to 800 V, and the rated voltage of the internal load of the vehicle may be 12 V.

When operating a switch to connect the battery to the load, if there is a voltage difference across the switch, surge voltage and current may occur due to the parasitic inductance of the load side capacitor and the connecting wires, which may cause damage to internal components. To solve this problem, the load side capacitor is initially charged by connecting a relay and a resistor.

However, there is a problem that a separate relay and resistor are required, which increases the cost and area.

### [DISCLOSURE OF INVENTION]

### [TECHNICAL PROBLEM]

The technical problem to be solved by the present invention is to provide a power conversion device capable of initial charging and a vehicle battery system including the same..

### [TECHNICAL SOLUTION]

In order to solve the above technical problem, according to one embodiment of the present invention, a power conversion device includes a power conversion unit configured to convert an alternating current power to a direct current power to charge a battery when connected to an alternating current power source; and an initial charging unit connected to a secondary output side of the power conversion unit to initially charge a load side capacitor, and an output terminal of the power conversion unit is connected to the battery and the load side capacitor.

The power conversion unit may include a first output terminal connected to a (+) terminal of the battery, a second output terminal connected to ae (-) terminal of the battery, and a third output terminal connected to the load side capacitor. The first output terminal and the third output terminal may be connected by a first switch, the alternating current power source may be a three-phase, four-wire AC power source, the power conversion unit may include three power conversion units that are respectively connected to the three phases to perform power conversion, and the initial charging unit may be connected to the first output terminal of the first power conversion unit, which is one of the three power conversion units.

When the first switch is turned off, the first output terminal and the third output terminal may be connected inside the power conversion unit to initially charge the load side capacitor.

The power conversion unit may include a primary side into which the alternating current power is input, a transformer configured to convert power of the primary side, and a secondary side connected to an output of the transformer. The secondary side of the power conversion unit may include a full bridge circuit connected to an output terminal of the transformer, a first high-side switch and a first low-side switch connected in parallel to the full bridge circuit, and an LC circuit connected to a node to which the first high-side switch and the first low-side switch are connected. The first output terminal may beconnected to a (+) terminal of the full bridge circuit, the second output terminal may be connected to a (-) terminal of the full bridge circuit, and the third output terminal may be connected to a node connecting a first inductor and a first capacitor of the LC circuit.

The initial charing unit may include a second switch connected in series to the first capacitor, and a first diode connected in parallel to the first capacitor.

A third switch and a fourth switch with different connection directions may be connected in series to each of the first output terminals of the three power converters.

The power conversion device may further include a first capacitor unit connected in parallel to a node to which the first output terminals of the three power converters are connected.

The first capacitor unit, the fourth switch, the first diode, the first inductor, the first high-side switch, and the second low-side switch may form an H-bridge circuit.

When the load side capacitor is initially charged, the first switch may be turned off, the fourth switch connected to the first output terminal in an input direction may be turned on, the second switch may be turned off, and the first high-side switch may be turned on. A voltage of the battery may be input through the first output terminal and output to the second output terminal to initially charge the load side capacitor.

When a DC power source is connected to the battery, the battery may be charged through the DC power source, and after the battery has been charged, the load side capacitor may be initially charged.

If the voltage of the battery 220 is lower than the initially-charged voltage of the load side capacitor,the second switch is turned off, the third switch and the fourth switch of the first power conversion unit are turned on, the third switch and the fourth switch of the second power conversion unit are turned off, the third switch and the fourth switch of the third power conversion unit are turned off, the first high-side switch of each of the first power conversion unit, the second power conversion unit, and the third power conversion unit is turned on, so the the load side capacitor is charged to the first voltage, which is the battery voltage, and the first capacitor of the second power conversion unit and the first capacitor of the third power conversion unit may be charged to the first voltage. Thereafter, when the second switch is turned on, the third switch and the fourth switch of the first power conversion unit are turned off, the third switch and the fourth switch of the second power conversion unit are turned on, the third switch and the fourth switch of the third power conversion unit are turned on, and the first high-side switch of each of the first power conversion unit, the second power conversion unit, and the third power conversion unit is turned on, the load-side capacitor may be charged to a second voltage that is the sum of the first voltage and the battery voltage, and the first capacitor C1 may be charged to the first voltage. Subsequently, when the second switch is turned off, the third switch and the fourth switch of the first power conversion unit are turned on, the third switch and the fourth switch of the second power conversion unit are turned on, the third switch and the fourth switch of the third power conversion unit are turned on, and the first high-side switch of each of the first power conversion unit, the second power conversion unit, and the third power conversion unit is turned on, the load side capacitor may be charged to the second voltage.

A vehicle battery system according to an embodiment of the present invention may include one of the power conversion devices.

### [ADVANTAGEOUS EFFECTS]

According to embodiments of the present invention, initial charging is possible without a separate relay and resistor for initial charging by adding a simple component to an on-board charger (OBC).

### [BRIEF DESCRIPTION OF DRAWINGS]

FIG. 1 is a block diagram of a power conversion device according to an embodiment of the present invention.
FIG. 2 is a block diagram of a power conversion device according to an embodiment of the present invention.
FIG. 3 illustrates an environment of a vehicle battery system to which a power conversion device according to embodiments of the present invention is applied.
FIG. 4 to FIG. 6 are circuit diagrams of a power conversion device according to embodiments of the present invention.
FIG. 7 to FIG. 18 are drawings for describing a power conversion device according to embodiments of the present invention.

### [BEST MODE FOR CARRYING OUT THE INVENTION]

Hereinafter, preferred embodiments of the invention will be described in detail with reference to the accompanying drawings.

However, the technical idea of the present invention is not limited to some embodiments which will described below, but may be implemented in various other forms, and one or more of components of the embodiments may be selectively combined and substituted for use within the scope of the technical idea of the present invention.

Unless defined otherwise, all the terms (including technical and scientific terms) used herein have the same meaning as commonly understood by one of ordinary skill in the art to which the present invention belongs. It will be further understood that the terms, such as those defined in commonly used dictionaries, should be interpreted as having meanings that are consistent with their meanings in the context of the relevant art.

The terminology used in embodiments of the present disclosure is for the purpose of describing particular embodiments only and is not intended to be limiting of the inventive concept.

In this specification, the singular may also include the plural unless the context clearly indicates otherwise, and "at least one (or more than one) of A, B and C" used herein may include one or more of all possible combinations of A, B, and C.

In describing the components of the embodiment according to the present disclosure, terms such as first, second, "A", "B", (a), (b), and the like may be used. These terms are merely intended to distinguish one component from another component, and the terms do not limit the nature, sequence or order of the constituent components. Such terms are only for distinguishing one component from another component, and nature, a sequence, an order, or the like of the corresponding component are not limited by the terms.

In addition, when it is described that one component is "connected", "coupled", or "joined" to the other component, it shall be construed as not only being directly connected, coupled, or joined to the other component, but also as being "connected", "coupled", or "joined" by another component between the one component and the other component.

In addition, it will be understood that, when each component is referred to as being formed or disposed "on (above)" or "under (below)" the other component, it can be directly "on" or "under" the other component or be indirectly formed with one or more intervening components therebetween. In addition, it will also be understood that, when each component is referred to as being formed or disposed "on (above)" or "under (below)" the other component, it may mean an upward direction and a downward direction of the component.

Modified embodiments according to the present embodiment may include some components of each embodiment and some components of other embodiments together. That is, a modified embodiment may include one embodiment among various embodiments, but some components may be omitted and some components of other corresponding embodiments may be included. Or, it may be the other way around. Features, structures, effects, and the like to be described in the embodiments are included in at least one embodiment, and are not necessarily limited to only one embodiment. Furthermore, the features, structures, and effects illustrated in each embodiment can be combined or modified with respect to other embodiments by those skilled in the art in the field to which the embodiments belong. Therefore, contents related to these combinations and modifications should be construed as being included in the scope of the embodiments.

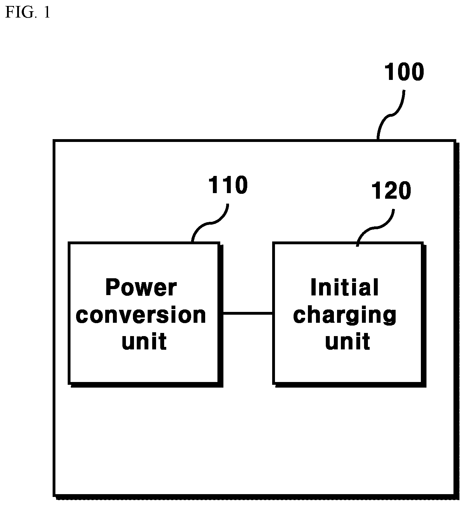

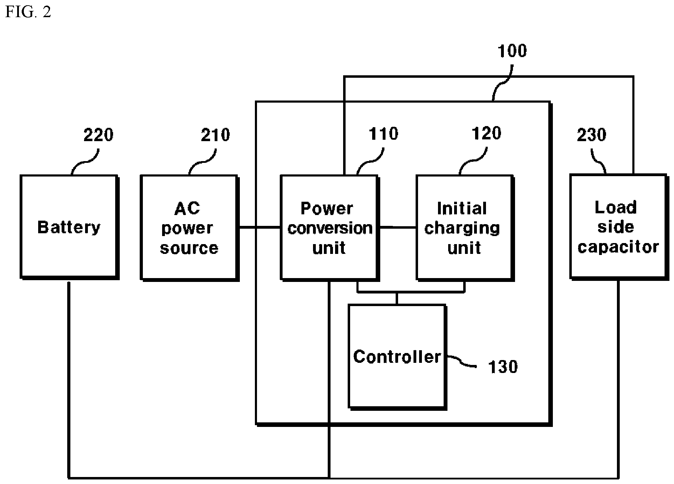

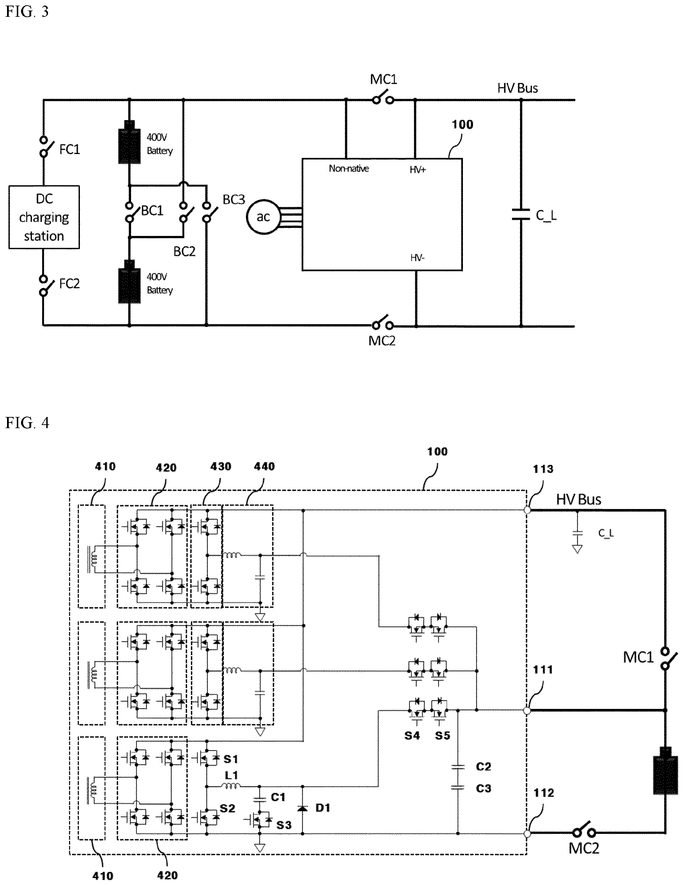

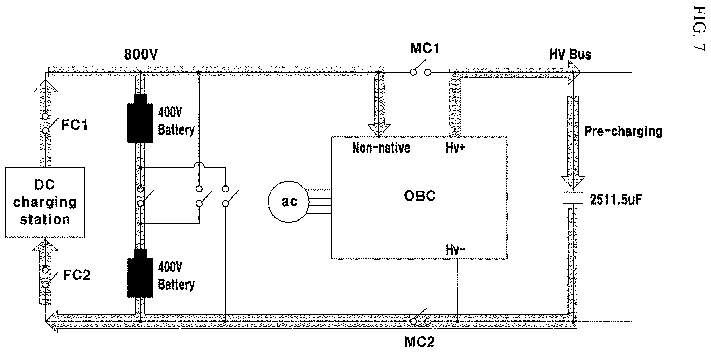

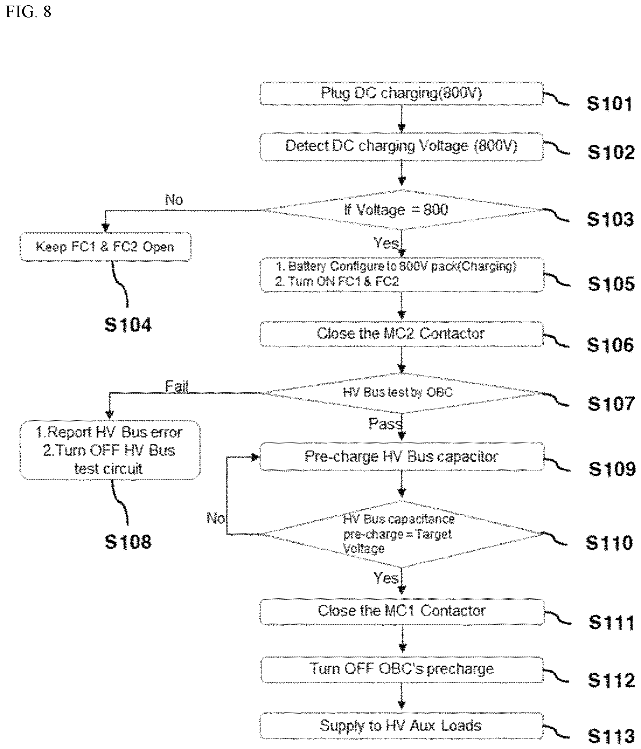

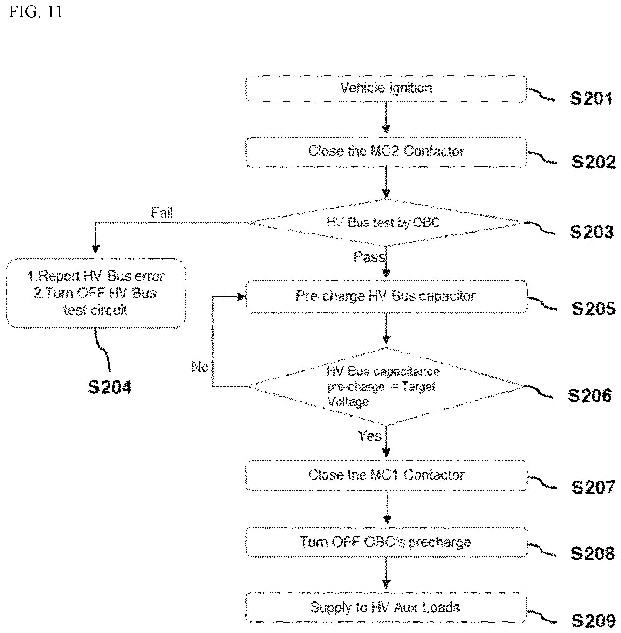

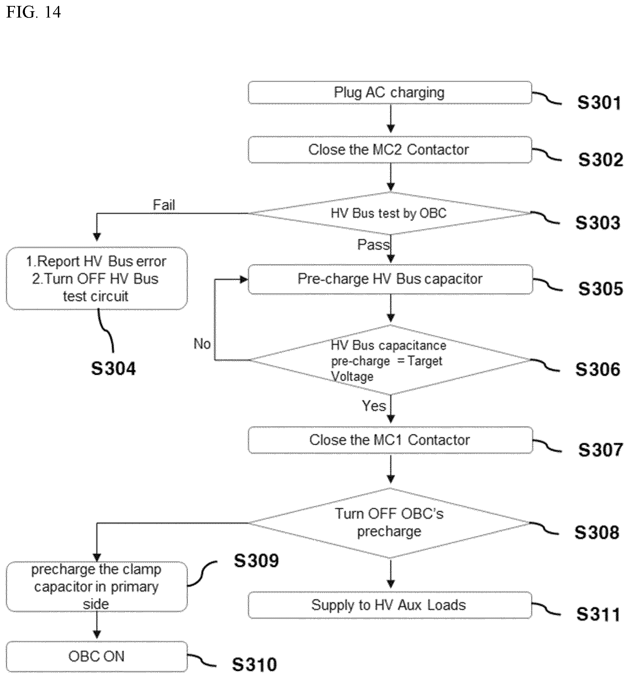

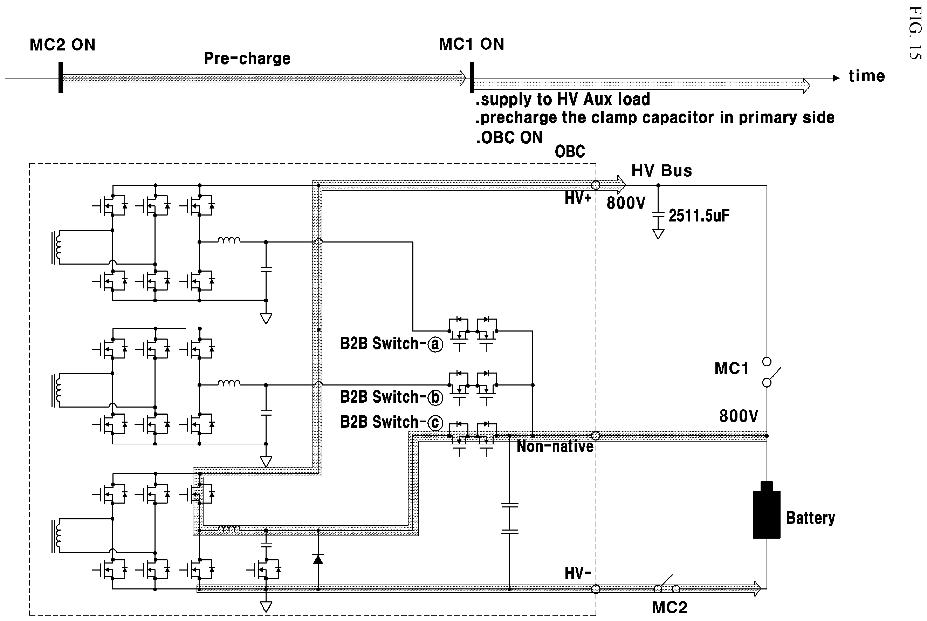

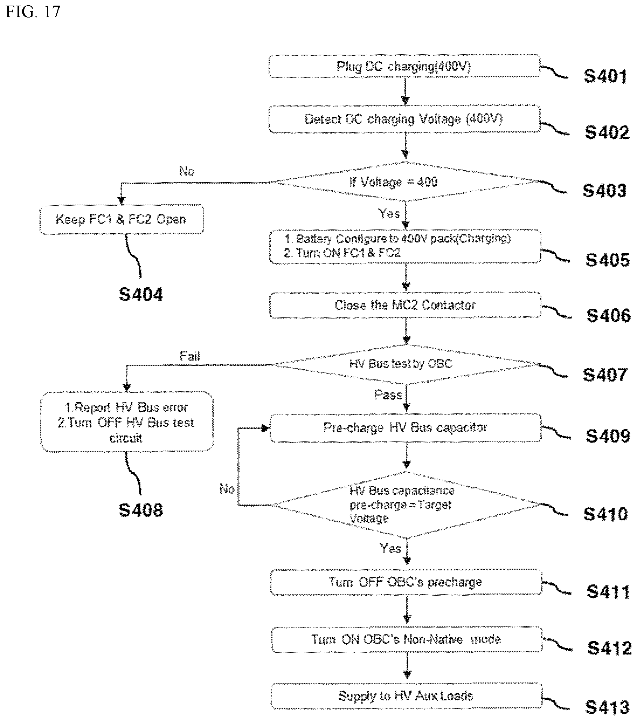

FIG. 1 is a block diagram of a power conversion device according to an embodiment of the present invention. FIG. 2 is a block diagram of a power conversion device according to an embodiment of the present invention, FIG. 3 illustrates an environment of a vehicle battery system to which a power conversion device according to embodiments of the present invention is applied, FIG. 4 to FIG. 6 are circuit diagrams of a power conversion device according to embodiments of the present invention, and FIG. 7 to FIG. 18 are drawings for describing a power conversion device according to embodiments of the present invention.

A power conversion device 100 according to an embodiment of the present invention may be composed of a power conversion unit 110 and an initial charging unit 120, and may include a controller 130.

The power conversion device 100 according to an embodiment of the present invention may be the power conversion device 100 applied to a vehicle battery system, or may be an on-board charger (OBC) that, when connected to an alternating current power source, charges a battery using power from the alternating current power source.

The power conversion device 110 converts alternating current power into direct current power to charge the battery, when connected to the alternating current power source 210. The power conversion device 110 converts alternating current power from the alternating current power source 210 into direct current power to charge the battery. The power conversion device 110 may include an input terminal connected to the alternating current power source 210 and an output terminal to which the converted power is output. The output terminal of the power conversion device 110 may be connected to a battery 220, and may be connected to a load side capacitor 230. The battery 220 may be a vehicle battery, and the load side capacitor 230 may be a capacitor located at a load terminal to which the internal loads of the vehicle are connected. The load side capacitor 230 may play a role in ensuring that the battery 220 and the load are stably connected.

The initial charging unit 120 may be connected to the secondary output side of the power conversion unit 110 to initially charge the load side capacitor 230. The initial charging unit 120 may be connected to the secondary output side of the power conversion unit 110 to form a circuit for initial charging, and may initially charge the load side capacitor 230 depending on the connection state of the power conversion unit 110 and the initial charging unit 120.

The power conversion device 100 according to an embodiment of the present invention may be connected to a vehicle battery system as shown in FIG. 3. The battery may be composed of a single battery, or, as shown in FIG. 3, may be composed of multiple batteries, and the battery voltage may be implemented in various ways depending on the connection state. For example, as shown in FIG. 3, for two 400 V batteries, if BC1 is in an on state and BC2 and BC3 are in an off state, the two batteries may be connected in series to form an 800 V battery. In addition, if BC1 is in the off state and BC2 and BC3 are in the on state, the two batteries may be connected in parallel to form a 400 V battery, and if BC1 is in off state and one of BC2 and BC3 is in the on state and the other is in the off state, a single 400 V battery may be formed.

When charging the battery, a DC charger (DC CHARGING STATION) may be connected, and when the DC charger is connected, FC1 and FC2 may be turned on. In addition to the DC charger, if the power conversion device 100 according to the embodiment of the present invention is connected to an AC power source such as a grid GRID, the AC may be converted into DC to charge the battery. The power stored in the battery 220 may be output to the load through the load side capacitor C_L. The load side capacitor 230 may be connected to a high-voltage bus HV BUS. The power conversion device 100 may include three output terminals. Two of the output terminals may be respectively connected to HV (+) and HV (-) of the high-voltage bus, and one output terminal NON-NATIVE may be connected to the battery.

The power conversion unit 110 may include a plurality of output terminals. The power conversion unit 110 may include a first output terminal 111 connected to the (+) terminal of the battery 220, a second output terminal 112 connected to the (-) terminal of the battery 220, and a third output terminal 113 connected to the load side capacitor 230. The first output terminal 111 and the third output terminal 113 may be connected to a switch MC1, and the second output terminal may be connected to the (-) terminal of the battery and a switch MC2. The switches MC1 and MC2 may be relays or MOSFETs and may include a body diode.

The input terminal of the power conversion unit 110 may be connected to the AC power source 210. Here, the AC power source 210 may be a three-phase, four-wire AC power source, or may be a single-phase AC power source. When the AC power source 210 is a three-phase, four-wire AC power source, the power conversion unit 110 may include three power conversion units that are respectively connected to the three phases to convert power. The initial charging unit 120 may be connected to the first output terminal of a first power conversion unit, which is one of the three power conversion units.

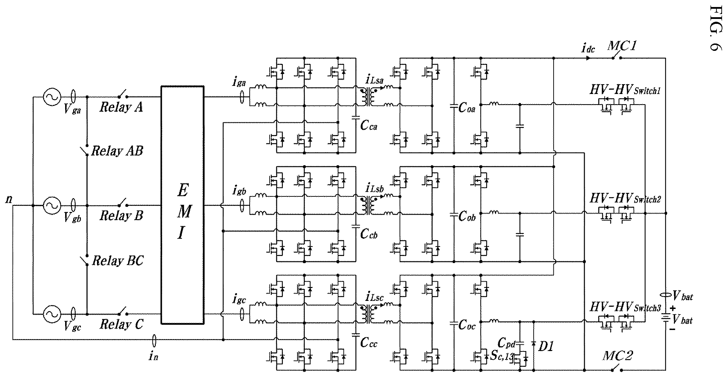

Each of the power conversion units may include a primary side into which the AC power of the AC power source 210 is input, a transformer 410 that converts the power of the primary side, and a secondary side connected to the output of the transformer 410. That is, the AC power source 210 may be connected to the primary side PRIMARY of the transformer 410, and the output terminal may be connected to the secondary side SECONDARY of the transformer 410. The input terminal connected to the AC power source 210 may include an EMI filter as shown in FIG. 6, and may include a primary-side switch unit, a transformer, and a secondary-side switch unit to convert each phase of the AC power source 210.

The secondary side of the power conversion unit may include a full bridge circuit 420, a first high-side switch and a first low-side switch 430, and an LC circuit 440. The full bridge circuit 420 may be connected to the output terminal of the transformer 410, the first high-side switch S1 and the first low-side switch S2 may be connected in parallel to the full bridge circuit 420, and the LC circuit 440 may be connected to a node to which the first high-side switch S1 and the first low-side switch S2 are connected.

The full bridge circuit 420 may include two high-side switches and two low-side switches, and the high-side switches and the low-side switches are connected in series to each other, and the two nodes connecting the high-side switches and the low-side switches may be respectively connected to both terminals of the secondary side of the transformer in the power conversion unit. The high-side switch and the low-side switch connected in series may be complementarily conductive with each other. The first high-side switch S1 and the first low-side switch S2 may be connected to the output terminal side of the full bridge circuit 420, and an inductor L1 and a capacitor C1 may be connected to a node to which the first high-side switch S1 and the first low-side switch S2 are connected. Here, each switch may be a MOSFET and may include a body diode.

In this case, the first output terminal 111 may be connected to the (+) terminal of the full bridge circuit 420, the second output terminal 112 may be connected to the (-) terminal of the full bridge circuit 420, and the third output terminal 113 may be connected to a node connecting the first inductor L1 and the first capacitor C1 of the LC circuit 440.

The initial charging unit 120 may include a switch S3 connected in series to the first capacitor C1 and a first diode D1 connected in parallel to the first capacitor C1. A switch S4 and a switch S5 having different connection directions may be connected in series to each of the first output terminals of the three power conversion units. Each switch may be a MOSFET and may include a body diode. The switch S4 and the switch S5 having different connection directions may be connected to each other at their sources, or may be connected to each other at their drains according to the type of MOSFET. The body diodes may also be connected in opposite directions.

The power conversion unit 110 may include a capacitor unit connected in parallel to a node to which the first output terminal 111 is connected. Here, the capacitor unit may include a plurality of capacitors connected in series, and may include two capacitors C2 and C3.

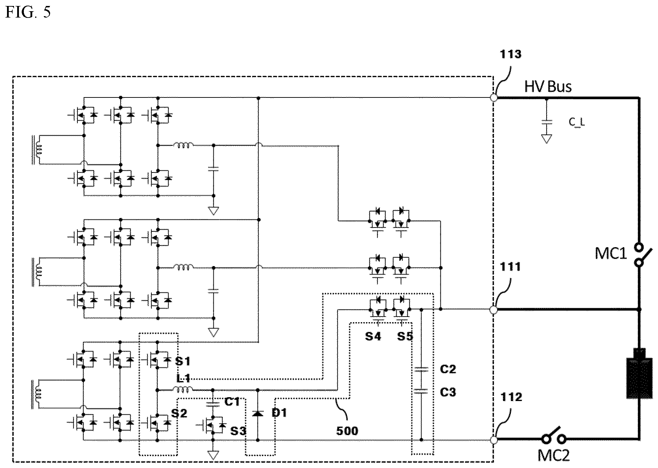

The capacitor unit, the switch S5, the first diode D1, the first inductor L1, the first high-side switch S1, and the second low-side switch S2 may form an H-bridge circuit 500. The battery 220 and the load side capacitor 230 may be connected through the H-bridge circuit 500, as shown in FIG. 5, and the H-bridge circuit 500 may operate as a buck-boost converter. That is, the voltage of the battery 220 may be stepped up or stepped down such that the load side capacitor 230 is initially charged according to the voltage level of the battery 220. Through this, the load side capacitor 230 may be initially charged using the voltage of the battery 220.

When performing initial charging with a boost circuit, an inrush current may occur on the output side at the moment the duty is applied. As an inrush current may occur at the beginning of the initial charging, the battery 220 and the load side capacitor 230 may be required to operate as an H-bridge in order to prevent the inrush current from occurring until the output-side capacitor C1 is sufficiently charged. The capacitor unit, the switch S5, the first diode D1, the first inductor L1, the first high-side switch S1, and the second low-side switch S2 may form the H-bridge circuit 500, thereby solving the inrush current.

By adding, at the first output terminal side, only the switch S3, the diode D1, the switches S4 and S5, and the capacitors C2 and C3 to the configuration of the power conversion unit 110 that converts AC power of the AC power source 210 into DC power, the load side capacitor 230 may be initially charged.

In the state where the switch MC1 is turned off, the first output terminal 111 and the third output terminal 113 may be connected inside the power conversion unit 110 to initially charge the load side capacitor 230.

When the load side capacitor 230 is initially charged, the switch MC1 is turned off, the switch S5 connected to the first output terminal 111 in the input direction is turned on, the switch S3 is turned off, and the first high-side switch S1 is turned on. In this case, the voltage of the battery 220 is input through the first output terminal 111 and output to the second output terminal 112 to initially charge the load side capacitor 230.

In order to prevent damage that may occur due to a voltage difference when the voltage of the battery 220 is directly connected to the load side capacitor 230, it is necessary to initially charge the load side capacitor 230 with a required voltage. To this end, by connecting the battery 220 and the load side capacitor 230 via the initial charging unit 120 and the power conversion unit 110, the load side capacitor 230 may be initially charged through the voltage of the battery 220 before directly connecting the battery 220 to the load side capacitor 230. To accomplish this, it is necessary to connect the (+) terminal of the battery 220 to the first output terminal 111, rather than directly connect the (+) terminal of the battery 220 to the load side capacitor 230, and therefore, MC1 is turned off and MC2 is turned on, S5 of the switches S4 and S5 is turned on and S4 is turned off, S2 and S3 are turned off, and S1 is turned on, so that a connection is made between the battery 220 and the load side capacitor 230 via a path passing through the first output terminal 111, the body diodes of S5 and S4, the first inductor L1, S1, and the third output terminal 113 to initially charge the load side capacitor 230.

In this case, as described above, the capacitor unit, the switch S5, the first diode D1, the first inductor L1, the first high-side switch S1, and the second low-side switch S2 may form the H-bridge circuit 500, which may step up or step down the voltage of the battery 220 to initially charge the load side capacitor 230. By forming a simple circuit with elements within the power conversion unit 110, the load side capacitor 230 may be initialized without the need for a separate relay and resistor for initial charging.

In initializing the load side capacitor 230 using the battery 220, the control unit 130 may control the switches to perform the initial charing of the load side capacitor 230 depending on the situation. For example, the sequence of operations may be different for each situation, such as when the battery 220 is charged with the DC charger, when the battery 220 is charged while the vehicle is in operation, when the battery 220 is charged with the alternating current power source 210, when the battery 220 voltage is low, etc.

When a DC power source is connected to the battery 220, the battery 220 may be charged via the DC power source, and after the battery 220 has been charged, the load side capacitor 230 may be initially charged.

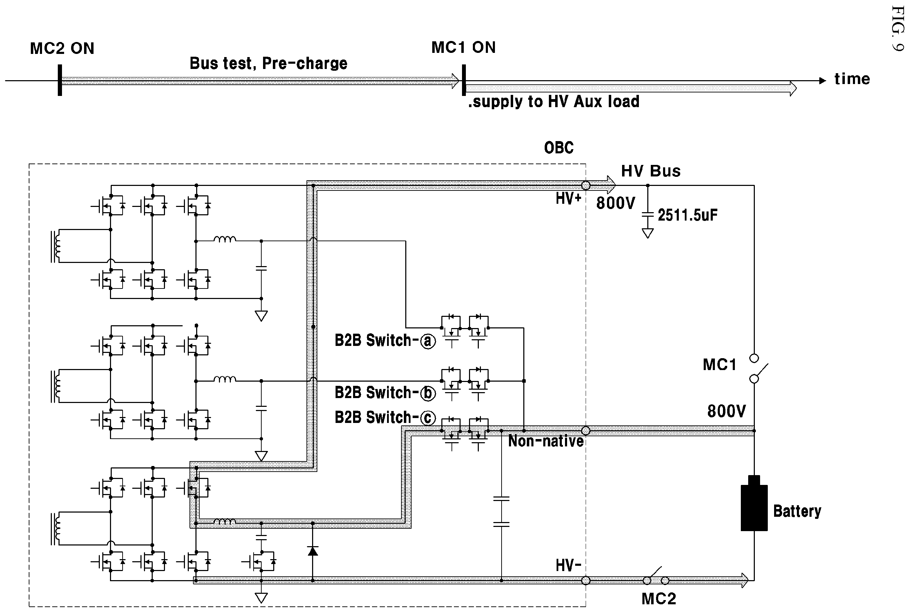

When the DC charger is connected and the battery 220 is charged, the power from the battery 220 may be used to initially charge the load side capacitor via the power conversion device 100, that is, OBC. For example, as shown in FIGS. 7 to 9, after the DC charger charges the battery 220 to 800 V, and the load side capacitor 230 is initially charged to 800 V, the battery 220 and the load side capacitor 230 may be connected. To this end, first, when the plug of a 800 V DC charger is connected to a vehicle (S101), a DC charging voltage is detected (S102) and it is determined whether the DC charging voltage is identical to the battery voltage of 800 V (S103). If the battery voltage and DC charging voltage are not identical to each other, FC1 and FC2 may be kept off (S104) to prevent the DC charger and battery 220 from being connected to maintain safety. If the battery voltage and DC charging voltage are identical to each other, the battery forms an 800 V battery pack, and FC1 and FC2 are turned on to charge the battery (S105). When the battery is charged, MC2 is turned on (S106) and the high voltage bus HV BUS is tested with the OBC (S107). If the test for the high voltage bus fails, an HV BUS error is sent to the external MCU or the like and the test circuit is turned off (S108). If the test for the high voltage bus passes, a high-voltage bus capacitor, which is the load side capacitor, is initially charged (S109). The initial charging is performed after determining that the initial charging voltage of the high-voltage bus capacitor has reached a target voltage (S110), and when the initial charging is complete, MC1 is turned on (S111) and the initial charging for the OBC is turned off (S112) to directly connect the battery 220 and the high-voltage bus to supply the battery voltage to the load (S113). As shown in FIG. 9, MC1 is turned off and MC2 is turned on to connect the battery 220 and the load side capacitor 230 through a path formed inside the OBC to test the high-voltage bus and initialize the load side capacitor, and then MC1 can be turned on to connect the battery 220 directly to the high-voltage bus to supply the battery voltage to the load.

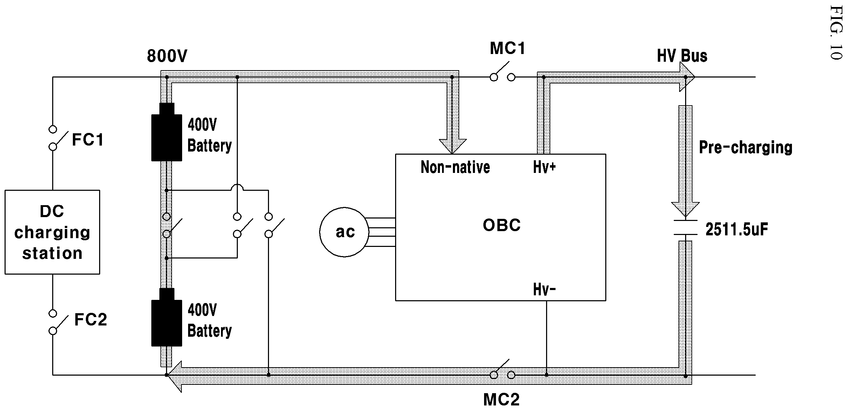

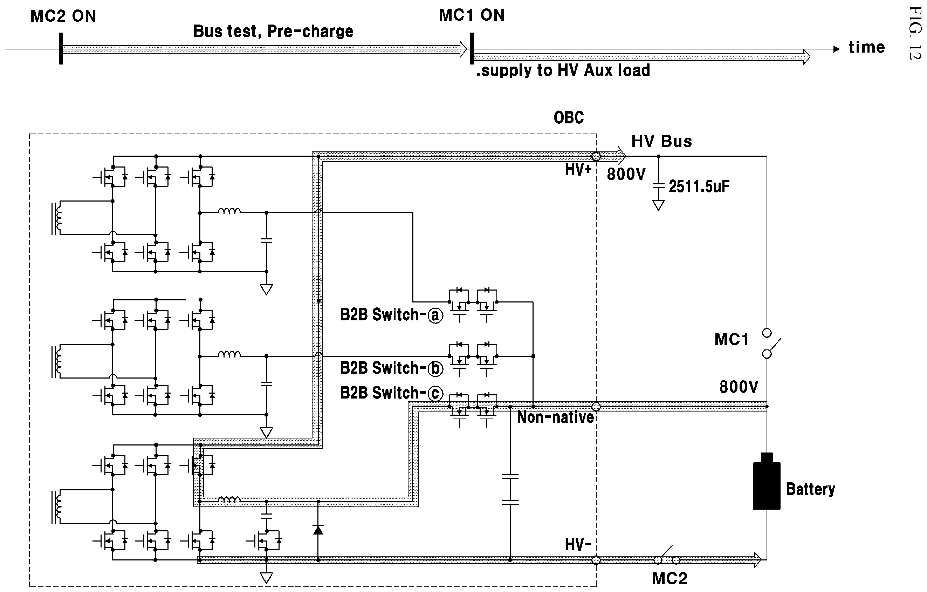

The load side capacitor may be initially charged through the OBC that is the power conversion device 100, with power from the battery 220 in the current state of the battery 220 without any connection to the battery 220 for charge, such as when the vehicle is in operation. For example, as shown in FIGS. 10 through 12, the battery 220 and the load side capacitor 230 may be connected after the load side capacitor 230 is initially charged to 800 V, which is the voltage of the battery 220. To this end, when a vehicle start is detected (S201), MC2 is turned on (S202) and the high voltage bus HV BUS is tested with the OBC (S203). If the test for the high voltage bus fails, an HV BUS error is sent to the external MCU or the like and the test circuit is turned off (S204). If the test for the high voltage bus passes, a high-voltage bus capacitor, which is the load-side capacitor, is initially charged (S205). The initial charging is performed after determining that the initial charging voltage of the high-voltage bus capacitor has reached a target voltage (S206), and when the initial charging is complete, MC1 is turned on (S207) and the initial charging for the OBC is turned off (S208) to directly connect the battery 220 and the high-voltage bus to supply the battery voltage to the load (S209). As shown in FIG. 12, MC1 is turned off and MC2 is turned on to connect the battery 220 and the load side capacitor 230 through a path formed inside the OBC to test the high-voltage bus and initialize the load side capacitor, and then MC1 can be turned on to connect the battery 220 directly to the high-voltage bus to supply the battery voltage to the load.

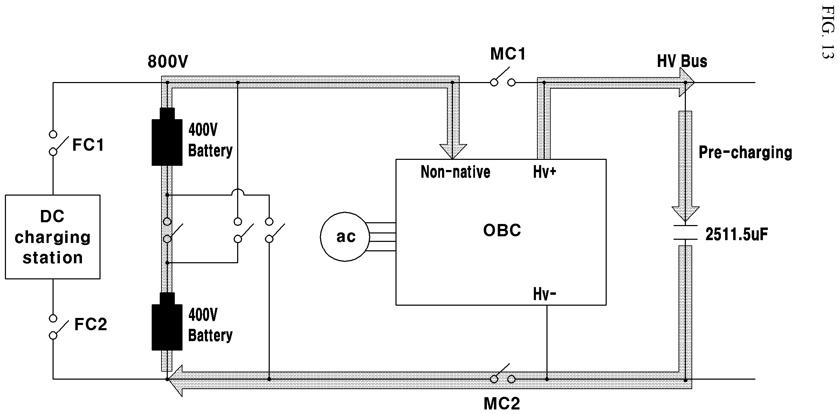

When the alternating current power source is connected to the OBC and the battery 220 is charged through the OBC, the power from the battery 220 may be used to initially charge the load side capacitor through the OBC that is the power conversion device 100. For example, as shown in FIGS. 13 to 15, when an AC power source 210 is connected, the load side capacitor 230 is initially charged to 800 V, and then the battery 220 and the load-side capacitor 230 are connected and the battery 220 may be charged to 800 V. To this end, first, when the plug of the AC power source is connected to the vehicle (S301), MC2 is turned on (S302) and the high voltage bus HV BUS is tested with the OBC (S303). If the test for the high voltage bus fails, an HV BUS error is sent to the external MCU or the like and the test circuit is turned off (S304). If the test for the high voltage bus passes, a high-voltage bus capacitor, which is the load side capacitor, is initially charged (S305). The initial charging is performed after determining that the initial charging voltage of the high-voltage bus capacitor has reached a target voltage (S306), and when the initial charging is complete, MC1 is turned on (S307) and the initial charging for the OBC is turned off (S308) to directly connect the battery 220 and the high-voltage bus to supply the battery voltage to the load (S311), the clamp capacitor in the primary side of the OBC is initially charged (S309), and the OBC is turned on (S310) to charge the battery. As shown in FIG. 9, after the high voltage bus has been tested with an alternating current power source connected to the OBC and the load side capacitor 230 has been initially charged, MC1 may be turned on to directly connect the battery 220 to the high-voltage bus to supply battery voltage to the load.

If the voltage of the battery 220 is lower than the initially-charged voltage of the load side capacitor 230, it is necessary to step up the voltage of the battery 220 to initially charge the load side capacitor 230. To this end, first, when the switch S3 is turned off, the switch S4 and the switch S5 of the first power conversion unit BLOCK C are turned on, the switches S4 and S5 of the second power conversion unit BLOCK A and the third power conversion unit BLOCK B are turned off, and the high-side switches S1 of the first power conversion unit, the second power conversion unit, and the third power conversion unit are turned on, the load side capacitor 230 may be charged to a first voltage, which is the battery voltage, and the first capacitors C1 of the second power conversion unit BLOCK A and the third power conversion unit BLOCK B may be charged to the first voltage.

Thereafter, when the switch S3 is turned on, the switch S4 and the switch S5 of the first power conversion unit BLOCK C are turned off, the switches S4 and S5 of the second power conversion unit (BLOCK A) and the third power conversion unit BLOCK B are turned on, and the high-side switches S1 of the first power conversion unit, the second power conversion unit, and the third power conversion unit are turned on, the load side capacitor may be charged to a second voltage that is the sum of the first voltage and the battery voltage, and the first capacitor C1 may be charged to the first voltage.

Thereafter, when the switch S3 is turned off, the switch S4 and the switch S5 of the first power conversion unit BLOCK C are turned on, the switches S4 and S5 of the second power conversion unit (BLOCK A) and the third power conversion unit BLOCK B are turned off, and the high-side switches S1 of the first power conversion unit, the second power conversion unit, and the third power conversion unit are turned on, the load side capacitor may be charged to the second voltage.

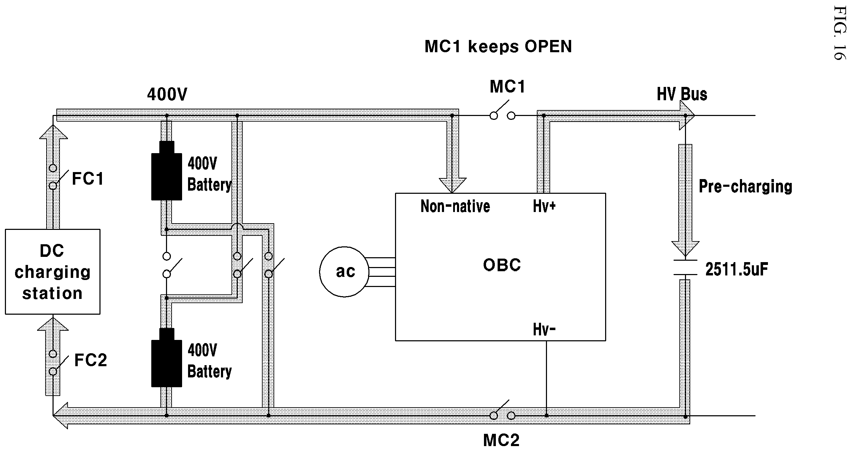

If the voltage of the battery 220 is lower than the initially-charged voltage of the load side capacitor 230, for example, as shown in FIGS. 16 to 18, if it is necessary to charge the battery to 400 V with a 400 V charger which is the DC charger and initially charge the load-side capacitor to 800 V, the initial charging may be performed as follows. In this case, since the voltage of the battery and the voltage of the load side capacitor are different, the battery and the load-side capacitor may be connected through the OBC without directly connecting them to supply power to the load.

To this end, first, when the plug of the DC charger is connected to the vehicle (S401), the DC charging voltage is detected (S402), and it is determined whether the DC charging voltage is 400 V (S403). If the DC charging voltage is not 400 V, FC1 and FC2 are kept off (S404) to prevent the DC charger and battery (220) from being connected, thereby maintaining safety. If the DC charging voltage is 400 V, the battery forms a 400 V battery pack, and FC1 and FC2 are turned on to charge the battery (S405). When the battery is charged, MC2 is turned on (S406) and the high voltage bus HV BUS is tested with the OBC (S407). If the test for the high voltage bus fails, an HV BUS error is sent to the external MCU or the like and the test circuit is turned off (S408). If the test for the high voltage bus passes, a high-voltage bus capacitor, which is the load side capacitor, is initially charged (S409). The initial charging is performed after determining that the initial charging voltage of the high-voltage bus capacitor has reached a target voltage (S410), and when the initial charging is complete, MC1 is turned on (S411) and the initial charging for the OBC is turned off (S412) to directly connect the battery 220 and the high-voltage bus to supply the battery voltage to the load (S413).

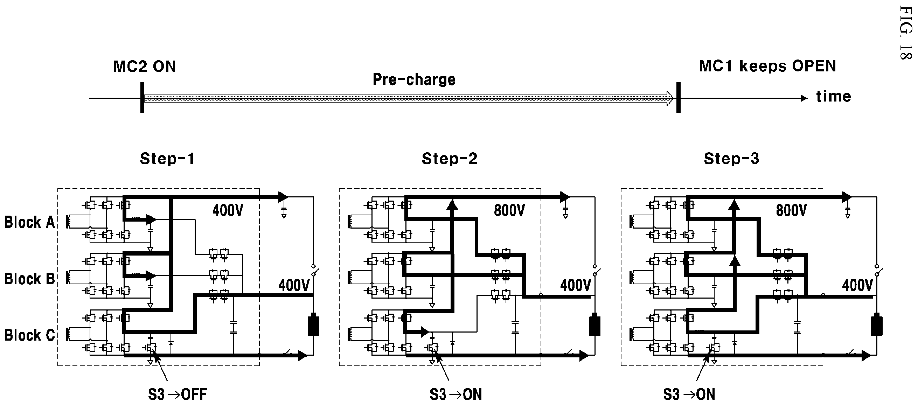

As shown in FIG. 18, if the voltage of the battery 220 is lower than the initially-charged voltage of the load side capacitor 230, first, MC1 is turned off and MC2 is turned on to initially charge the load side capacitor and the output side capacitors of the second power conversion unit and the third power conversion unit, BLOCK A and B, to the first voltage, which is the battery voltage, through a path formed by the first power conversion unit, BLOCK C, inside the OBC. In this case, BLOCK C may operate as an H-bridge circuit. The B2B switches A and B of the second and third power conversion units BLOCK A, B, are turned off, the high-side switch HIGH-SIDE MOSFETS is turned on, and the auxiliary MOSFET, which is the switch S3 of the first power conversion unit BLOCK C, is turned off to initially charge the load side capacitor to the first voltage of 400 V.

Thereafter, the B2B switches A and B of the second and third power conversion units BLOCK A, B are turned on, and the B2B switch C of the first power conversion unit BLOCK C is turned off, so that the load-side capacitor is charged through a path formed by the second and third power conversion units BLOCK A and B, and the first voltage of 400 V, which is the battery voltage, is added to the first voltage 400 V, which has been initially charged to the output side capacitor of the second and third power conversion units BLOCK A and B in the previous phase, to initially charge the load side capacitor to the second voltage 800 V. In this case, the BLOCK A and B may operate as a boost circuit. In this case, the auxiliary MOSFET, which is the switch S3 of the first power conversion unit BLOCK C, is turned on to initially charge the output side capacitor of the first power conversion unit BLOCK C to the first voltage of 400 V. In this case, the first power conversion unit BLOCK C may operate as a buck circuit.

After that, the B2B switch C of the first power conversion unit BLOCK C is turned on to charge the load side capacitor through a path formed by the first to third power conversion units BLOCK A, B, and C. In this case, the first power conversion unit BLOCK C may also operate as a boost circuit like BLOCK A and B. Through this, the battery voltage of 400 V may be boosted to 800 V to supply a voltage of 800 V to the load side capacitor 23, In this case, MC1 may be kept off to allow the battery 220 not to be directly connected to the load side capacitor 230.

The vehicle battery system according to an embodiment of the present invention may include an OBC, which is a power conversion device according to an embodiment of the present invention. A detailed description of the power conversion device of the vehicle battery system corresponds to the detailed description of the power conversion device of FIGS. 1 to 18, and thus, any duplicate description will be omitted below. A vehicle battery system includes a battery and a power conversion device that converts the power of the battery and outputs it to a load, or is connected to an AC power source to convert power from the AC power source to power for charging the battery and output the power to the battery.

In order to solve the above technical problem, a power conversion device according to an embodiment of the present invention includes a power conversion unit which converts an alternating current power to a direct current power when connected to an alternating current power source to charge a battery; and an initial charging unit which is connected to a secondary output side of the power conversion unit and initially charges a load side capacitor, and an output terminal of the power conversion unit is connected to the battery and the load side capacitor. Further, the power conversion unit includes a first output terminal connected to a (+) terminal of the battery; a second output terminal connected to ae (-) terminal of the battery; and a third output terminal connected to the load side capacitor. The first output terminal and the third output terminal are connected by a first switch, the alternating current power source is a three-phase, four-wire AC power source, the power conversion unit includes three power conversion units that are respectively connected to the three phases to perform power conversion, and the initial charging unit is connected to the first output terminal of the first power conversion unit, which is one of the three power conversion units. When the first switch is turned off, the first output terminal and the third output terminal are connected inside the power conversion unit to initially charge the load side capacitor.

Those of ordinary skill in the technical field related to the present embodiment will appreciate that it may be implemented in a modified form without departing from the essential characteristics of the above-described description. Therefore, the disclosed methods should be considered from an explanatory point of view rather than a limiting point of view. The scope of the present invention is presented in the claims rather than the above description, and all differences within the scope equivalent thereto should be construed as being included in the present invention.

## Claims

1. A power conversion device comprising:
a power conversion unit configured to convert an alternating current power to a direct current power to charge a battery when connected to an alternating current power source; and
an initial charging unit connected to a secondary output side of the power conversion unit and configured to initially charge a load side capacitor,
wherein an output terminal of the power conversion unit is connected to the battery and the load side capacitor.

2. The power conversion device of claim 1, wherein the power conversion unit comprises:
a first output terminal connected to a (+) terminal of the battery;
a second output terminal connected to a (-) terminal of the battery; and
a third output terminal connected to the load side capacitor,
wherein the first output terminal and the third output terminal are connected by a first switch,
wherein the alternating current power source is a three-phase, four-wire AC power source,
wherein the power conversion unit comprises three power conversion units which are respectively connected to the three phases to convert power, and
wherein the initial charging unit is connected to the first output terminal of the first power conversion unit which is one of the three power conversion units.

3. The power conversion device of claim 2, wherein, when the first switch is turned off, the first output terminal and the third output terminal are connected inside the power conversion unit to initially charge the load side capacitor.

4. The power conversion device of claim 2, wherein the power conversion unit comprises:
a primary side into which the alternating current power is input;
a transformer configured to convert power of the primary side; and
a secondary side connected to an output of the transformer,
wherein the secondary side of the power conversion unit comprises:
a full bridge circuit connected to an output terminal of the transformer;
a first high-side switch and a first low-side switch connected in parallel to the full bridge circuit; and
an LC circuit connected to a node to which the first high-side switch and the first low-side switch are connected,
wherein the first output terminal is connected to a (+) terminal of the full bridge circuit,
wherein the second output terminal is connected to a (-) terminal of the full bridge circuit, and
wherein the third output terminal is connected to a node connecting a first inductor and a first capacitor of the LC circuit.

5. The power conversion device of claim 4, wherein the initial charging unit comprises:
a second switch connected in series to the first capacitor; and
a first diode connected in parallel to the first capacitor.

6. The power conversion device of claim 5, wherein a third switch and a fourth switch with different connection directions are connected in series to each of the first output terminals of the three power conversion units.

7. The power conversion device of claim 6, comprising:
a first capacitor unit connected in parallel to a node to which the first output terminals of the three power conversion units are connected.

8. The power conversion device of claim 7, wherein the first capacitor unit, the fourth switch, the first diode, the first inductor, the first high-side switch, and the second low-side switch form an H-bridge circuit.

9. The power conversion device of claim 7, wherein, when the load side capacitor is initially charged, the first switch is turned off, the fourth switch connected to the first output terminal in an input direction is turned on, the second switch is turned off, and the first high-side switch is turned on, and
wherein a voltage of the battery is input through the first output terminal and output to the second output terminal to initially charge the load side capacitor.

10. The power conversion device of claim 9, wherein, when a DC power source is connected to the battery, the battery is charged through the DC power source, and
wherein, after the battery has been charged, the load side capacitor is initially charged.
